# EUROPEAN PATENT APPLICATION

(11) **EP 4 506 132 A1**
(43) Date of publication of application: **12.02.2025**
(21) Application number: 24795079.3
(22) Date of filing: 28.04.2024
(51) Int. Cl.: B28D 1/14, B23P 19/06, B65G 17/46, B65G 47/34

(54) **SUSPENSION TYPE PUNCHING AND SCREW DRIVING SYSTEM**

(30) Priority: 21.06.2023 CN 202310740166
(71) Applicant: Lenovo New Vision (Jiangsu) Equipment Service Co., Ltd, Yangcheng, Jiangsu 224000 (CN)
(72) Inventor: ZHU, Yanjin, Yancheng, Jiangsu 224000 (CN); CHEN, Yishan, Yancheng, Jiangsu 224000 (CN); ZHANG, Yutao, Yancheng, Jiangsu 224000 (CN)
(74) Representative: Chung, Hoi Kan
(86) International application number: PCT/CN2024/090296
(87) International publication number: WO 2024/260105

(57) **Abstract**

The present invention provides a suspended drilling and bolt mounting system, including a main frame, where a sling is arranged on the main frame, supporting mechanisms are arranged on two sides of the main frame in a length direction, the supporting mechanisms are used for preventing a large shaking amplitude of the main frame in a lifting process, the supporting mechanisms are further used for fixing a position of the main frame during drilling and bolt mounting of the system, a wall supporting mechanism matched with a side wall of a shaft is arranged on a side, close to a to-be-machined surface, of the main frame, a drilling and bolt mounting mechanism is arranged below the main frame, and a driving mechanism used for driving the drilling and bolt mounting mechanism to move along an X-axis, move along a Y-axis and rotate along a Z-axis is arranged between the main frame and the drilling and bolt mounting mechanism. According to the suspended drilling and bolt mounting system provided by the present invention, a supporting mechanism, a wall supporting mechanism, a driving mechanism, and the drilling and bolt mounting mechanism are arranged on the main frame to be matched with each other, and a hole position perpendicular to the ground is drilled on the wall of the shaft, so that a position of a bolt driving into the hole position is accurate, the structural strength of a bracket fixed to an inner wall of the shaft is guaranteed, and the stability of a lifting apparatus is guaranteed.

## Description

### TECHNICAL FIELD

The present invention relates to the technical field of shaft drilling apparatuses, and in particular, to a suspended drilling and bolt mounting system.

### BACKGROUND

Shaft drilling, as the name implies, refers to drilling holes in a channel extending in a vertical direction. The shaft refers to a space for a lifting apparatus to operate. A hole is drilled in the shaft and an expansion bolt is inserted into an inner wall of the shaft, so that a bracket can be subsequently fixed to the inner wall of the shaft, to provide stability for the lifting movement of the lifting apparatus operating in the shaft.

According to an existing shaft drilling apparatus, a winch usually works with a sling to drive the drilling apparatus to move in the shaft. Because of a large shaking amplitude of the sling during a descending process, the speed and precision of drilling a sidewall of the shaft are affected. This leads to a large deviation in an orientation and a position of the subsequently inserted bolt, further affecting subsequent fixation of the bracket, thereby presenting security risks in the lifting movement of the lifting apparatus.

### SUMMARY

The technical problem to be solved by the present invention is as follows: to overcome the problem in the prior art that, the shaking amplitude is large during a movement of a drilling apparatus in a shaft, which affects the speed and precision of drilling a sidewall of the shaft and thereby deviating the position and orientation of the expansion bolt subsequently inserted therein, the present invention provides a suspended drilling and bolt mounting system.

The technical solution used by the present invention to solve the technical problem is: a suspended drilling and bolt mounting system, including a main frame, where a sling used for controlling lifting of the main frame is arranged above the main frame, supporting mechanisms are arranged on two sides of the main frame in a length direction, the supporting mechanisms are used for preventing a large shaking amplitude of the main frame in a lifting process, the supporting mechanisms are further used for fixing a position of the main frame during drilling and bolt mounting of the system, a wall supporting mechanism matched with a side wall of a shaft is arranged on a side, close to a to-be-machined surface, of the main frame, a drilling and bolt mounting mechanism is arranged below the main frame, and a driving mechanism used for driving the drilling and bolt mounting mechanism to move along an X-axis, move along a Y-axis and rotate along a Z-axis is arranged between the main frame and the drilling and bolt mounting mechanism.

The drilling and bolt mounting system is controlled by the sling to enter the shaft, so that the shaking amplitude of the drilling and bolt mounting system in the shaft is prevented from being large. The supporting mechanism is used for being matched with two side walls arranged opposite to the shaft, on one hand, when the drilling and bolt mounting system moves up and down in the shaft, the shaking amplitude of the drilling and bolt mounting system in the shaft is reduced, and on the other hand, when the system drills holes and installs bolt on the side wall of the shaft, the supporting mechanism is pressed against the side wall of the shaft to fix a position of the main frame, and the stability of drilling and bolt mounting is guaranteed. The wall supporting mechanism works on the to-be-machined surface of the shaft, so that the drilling and bolt mounting system is more stable when moving up and down in the shaft, and a position of the drilling and bolt mounting system in the plumbing state is more accurate. The supporting mechanism, the wall supporting mechanism, the drilling and bolt mounting mechanism and the driving mechanism work with each other to drill the to-be-machined surface of the shaft and install the bolt into the hole, so as to ensure that the drilled hole is perpendicular to the ground.

Further, the supporting mechanism includes an intermediate plate and a floating plate, the floating plate is arranged on a side of the intermediate plate away from the main frame, a middle position of the floating plate is hinged to the intermediate plate along a vertical direction, a limiting spring used for limiting a swing amplitude of the floating plate is arranged on the intermediate plate, the limiting spring is arranged between the floating plate and the intermediate plate, supporting claws are arranged at two ends of a side wall of the floating plate away from the intermediate plate, a supporting wheel is arranged above or below each supporting claw, an elastic component is arranged between the supporting wheel and the floating plate, under driving of the elastic component, a projection of the supporting wheel in a vertical direction is on an outer side of a projection of the supporting claw in a vertical direction, and the main frame is provided with an electric push rod used for reversely pushing the intermediate plates on the two supporting mechanisms towards two sides of the main frame.

The intermediate plates on the two supporting mechanisms are pushed out towards two sides by the electric push rod, so that the intermediate plates are close to the two opposite side walls of the shaft, and therefore the supporting wheel and the supporting claw are driven to get close to the two side walls of the shaft. Since under the driving of the elastic component, the projection of the supporting wheel in the vertical direction is on the outer side of the projection of the supporting claw in the vertical direction, when the supporting wheel is in contact with the side wall of the shaft, the supporting claw is not in contact with the side wall of the shaft. Through the action of the elastic component, the supporting wheel is elastic in contact with the side wall of the shaft, so that the drilling and bolt mounting system runs freely up and down in the shaft is guaranteed, and meanwhile, the shaking amplitude of the drilling and bolt mounting system in the shaft is reduced. When the drilling and bolt mounting system reaches the drilling position, the electric push rod continues to drive the intermediate plates to be close to the two side walls of the shaft, and the supporting claw is in contact with the side wall of the shaft, so that the drilling and bolt mounting system can be stably supported guaranteed, and the drilling stability is guaranteed.

Further, a wall of the shaft may be uneven, and the walls arranged oppositely are not be absolutely parallel. In order to enable the supporting wheel/supporting claws to be tightly attached to the wall of the shaft, the intermediate plate and the floating plate are both U-shaped plates, an inner diameter of the floating plate is slightly larger than an outer diameter of the intermediate plate, the intermediate plate partially extends into a U-shaped groove of the floating plate, a U-shaped connecting frame is arranged on an outer side of the intermediate plate, and a link pin work with the floating plate is vertically arranged in the connecting frame.

Further, in order to improve stability of connection between the supporting mechanism and the main frame, at least one set of sleeve assembly is arranged on the main frame, the sleeve assembly includes a sliding rod and a sliding sleeve, an axis of the sliding rod and an axis of the sliding sleeve are parallel to an axis of the electric push rod, the sliding rods are slidably connected to two ends of the sliding sleeve, and one end of each of the two sliding rods away from the sliding sleeve is fixedly connected to the intermediate plates on the two supporting mechanisms respectively.

Further, the wall supporting mechanism includes two wall supporting wheel assemblies arranged at intervals, each wall supporting wheel assembly includes an L-shaped frame and a wall supporting wheel, one end of the L-shaped frame is rotatably connected to the wall supporting wheel, the other end of the L-shaped frame is rotatably connected to the main frame along a horizontal direction, and a height of a rotation center of the wall supporting wheel is lower than a height of a rotation center between the L-shaped frame and the main frame.

The wall supporting wheel is arranged on the side of the main frame close to the to-be-machined surface of the shaft, and the wall supporting wheel is rotationally connected to the main frame by the L-shaped frame, so that the wall supporting wheel can freely rotate by 360 degrees. The wall supporting wheel is vertically arranged under the action of gravity and is matched with the to-be-machined surface of the shaft, so as to ensure that the drilling position of the drilling and bolt mounting system in the plumbing state is more accurate.

Further, the drilling and bolt mounting mechanism includes a machine frame and a drill and a knocking hammer arranged on the machine frame, axes of output ends of the drill and the knocking hammer are parallel, and the drill and the knocking hammer are arranged opposite in direction.

Further, the driving mechanism includes a first sliding rail, a second sliding rail, and a rotating shaft, the first sliding rail is arranged below the main frame along the X-axis, a first sliding block is slidably connected to the first sliding rail, a lead bolt and a first motor are arranged at one side of the first sliding rail for driving the first sliding block to slide back and forth along the X-axis, the second sliding rail is arranged at a lower end of the first sliding block along the Y-axis, a second sliding block is slidably connected to the second sliding rail, a lead bolt and a second motor are arranged at one side of the second sliding rail for driving the second sliding block to move back and forth along the Y-axis, the rotating shaft is arranged along the Z-axis, an upper end of the rotating shaft is rotatably connected to the second sliding block, a lower end of the rotating shaft is rotatably connected to the machine frame, and the second sliding block is in transmission connection with a third motor used for controlling the machine frame to rotate along the rotating shaft.

Further, a rebar detector is further arranged on the machine frame, and the rebar detector is provided with a motor lead bolt used for controlling the rebar detector to move back and forth on the Z-axis. A height of the rebar detector is adjusted by the motor lead bolt, the rebar detector detects a position height of the rebar in the to-be-machined surface of the shaft, and works with a sling used for controlling the height of the main frame, so that the drill is enabled to drill at a position without a rebar.

Further a bolt material supplying assembly is arranged on one side of the second sliding rail away from a to-be-drilled wall, the bolt material supplying assembly includes a chain wheel and a chain, a rotation center of the chain wheel is arranged along a horizontal direction, the chain is wound on the chain wheel, a plurality of material supplying units are arranged on an outer wall surface of the chain at intervals, each material supplying unit includes two bolt clamping plates which are oppositely arranged, a bolt is clamped in the bolt clamping plates, and an axis of the bolt is parallel to an axis of the chain wheel, a magnet used for attracting the bolt is arranged between the two bolt clamping plates of the material supplying unit, a material supplying in-place switch used for monitoring the bolt is arranged on one side of the highest point of the chain wheel, and a material shifting assembly used for shifting the bolt out of the bolt clamping plates so that the knocking hammer can grab the bolt conveniently is arranged on one side of the material supplying in-place switch.

A bolt is manually placed in each material supplying unit in advance, the bolt is fixed by the two bolt clamping plates and the magnet, the highest point of the chain wheel is used as a material supplying point, and the chain is driven to rotate along a fixed direction by the chain wheel, so that the bolt is supplied. The material supplying in-place switch is an infrared sensor, and when the material supplying in-place switch detects the bolt, the motor on the chain wheel stops rotating. The material shifting assembly is used for shifting the bolt out of the bolt clamping plate and away from the magnet, facilitating the knocking hammer to grab the bolt, and completing material supplying. The operation is repeated, and the bolt can be automatically fed.

Further, in order to shift the bolt out of the bolt clamping plates, the material shifting assembly includes a material shifting plate and a material shifting motor, an axis of an output end of the material shifting motor is parallel to the axis of the chain wheel, two material shifting plates arranged in parallel are arranged at the output end of the material shifting motor, the two material shifting plates are arranged at two sides of the chain wheel, and each material shifting plate is provided with an arc-shaped groove matched with the bolt.

Further, in order to control a movement range of the material shifting plate, one side of the material shifting motor is provided with a material shifting initial position switch and a material shifting in-place switch, when the material shifting plate is in contact with the material shifting initial position switch, the arc-shaped groove is arranged below the material supplying in-place switch, and when the material shifting plate is in contact with the material shifting in-place switch, the arc-shaped groove is arranged above the material supplying in-place switch.

The material shifting initial position switch and the material shifting in-place switch are microswitches, and the material shifting plate is in contact with the microswitch to confirm whether the material shifting plate is rotated in place or not, so that the material shifting motor is powered off in time.

Further, the suspended drilling and bolt mounting system further includes a measuring mechanism, where the measuring mechanism includes several distance sensors, a controller, and a laser plummet arranged on the main frame, and the distance sensors, the laser plummet, the first motor, the second motor and the third motor are all in circuit connection with the controller.

The laser plummet is used for detecting whether the system is in the plumbing state. The drilling and bolt mounting system works together with the sling by the winch, so that the whole drilling and bolt mounting system is in the plumbing state, and the drilling and bolt mounting system is always perpendicular to the ground under the action of the winch and the sling is guaranteed. In this state, a distance from the distance sensor to the to-be-machined surface of the shaft is measured, then the supporting claw is extended out to lock the position of the main frame, and in this case, the distance between the distance sensor and the to-be-machined surface and the distance between the distance sensor and the to-be-machined surface after locking are calculated, the difference of the values is included when calculating drilling position, so as to ensure that the drilled hole is perpendicular to the ground.

The beneficial effects of the invention are as follows: according to the suspended drilling and bolt mounting system provided by the present invention, a supporting mechanism, a wall supporting mechanism, a driving mechanism, and the drilling and bolt mounting mechanism are arranged on the main frame to work together, and when the system is in a plumbing state, a hole position perpendicular to the ground is drilled on the wall of the shaft, so that a position of a bolt driving into the hole position is accurate, the structural strength of a bracket fixed to an inner wall of the shaft is guaranteed, and the stability of a lifting apparatus in lifting movement is guaranteed.

### BRIEF DESCRIPTION OF THE DRAWINGS

The present invention will be further described in conjunction with the accompanying drawings and embodiments.
FIG. 1 is a schematic structural diagram of an optimal embodiment of the present invention;
FIG. 2 is an enlarged view of A in FIG. 1;
FIG. 3 is a schematic structural diagram of a supporting mechanism;
FIG. 4 is a schematic structural diagram of an optimal embodiment of the present invention;
FIG. 5 is a schematic structural diagram of a bolt material supplying assembly;
FIG. 6 is a front view of a bolt material supplying assembly;
FIG. 7 is a side view of a bolt material supplying assembly;
FIG. 8 is a schematic structural diagram of a material shifting assembly; and
FIG. 9 is a schematic structural diagram of a drilling and bolt mounting mechanism.

In the figures: 1. main frame, 2. drilling and bolt mounting mechanism, 2-1. machine frame, 2-2. drill, 2-3. knocking hammer, 3. sling, 4. intermediate plate, 5. floating plate, 6. supporting claw, 7. supporting wheel, 8. elastic component, 9. link pin, 10. limiting spring, 11. electric push rod, 12. sliding rod, 13. sliding sleeve, 14. L-shaped frame, 15. wall supporting wheel, 16. first sliding rail, 17. second sliding rail, 18. first sliding block, 19. second sliding block, 21. rebar detector, 22. chain wheel, 23. chain, 24. bolt clamping plate, 25. magnet, 26. expansion bolt, 27. material supplying in-place switch, 28. material shifting plate, 28-1. arc-shaped groove, 29. material shifting motor, 30. material shifting initial position switch, 31. material shifting in-place switch, 32. distance sensor, 33. laser plummet, 34. material supplying motor.

### DETAILED DESCRIPTION OF THE EMBODIMENTS

The present invention will now be described in detail with reference to the accompanying drawings. The figure is a simplified schematic diagram illustrating a basic structure of the present invention in a schematic manner only, and therefore, the figure only displays a composition related to the present invention.

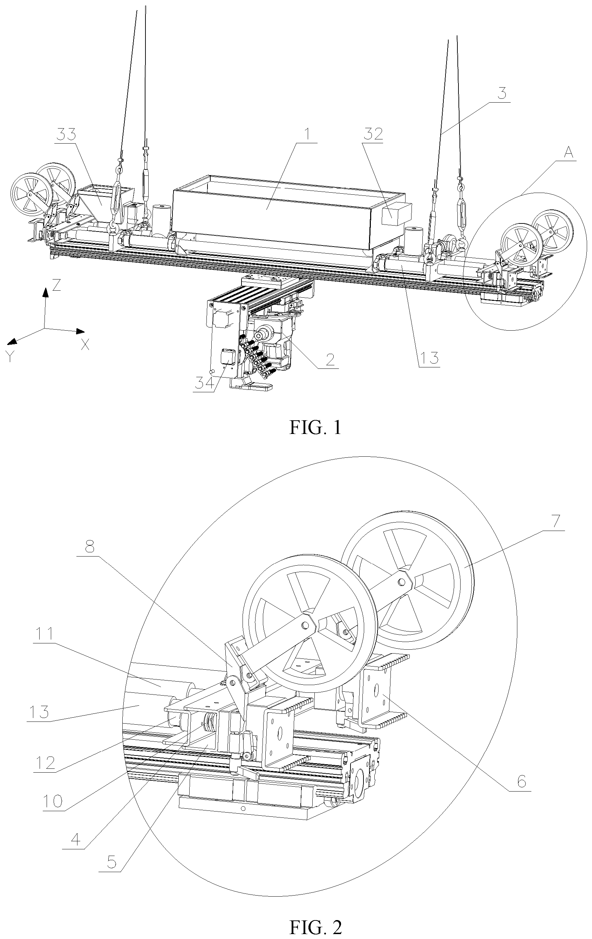

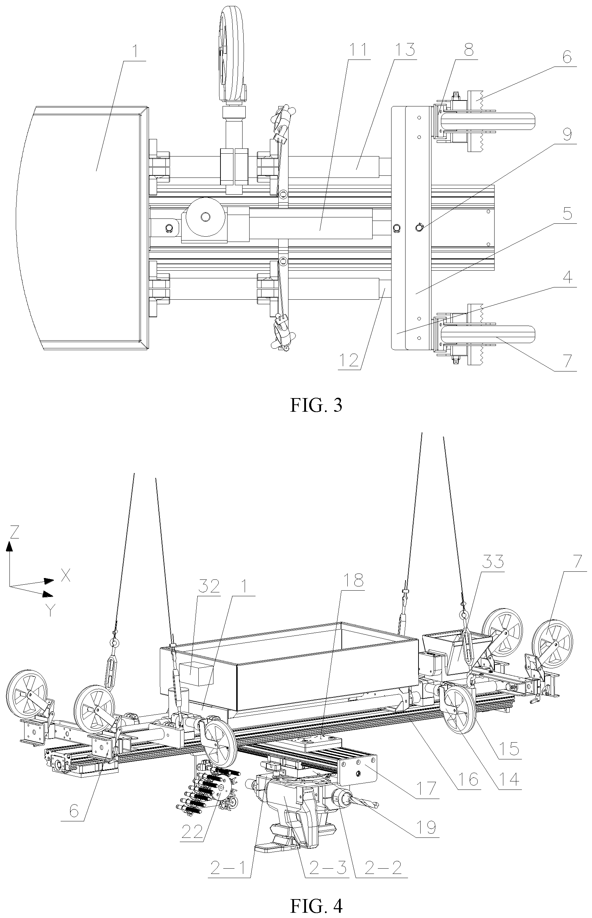

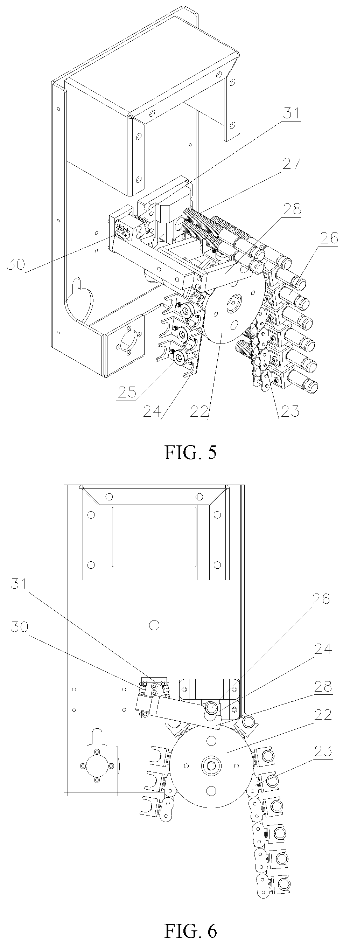

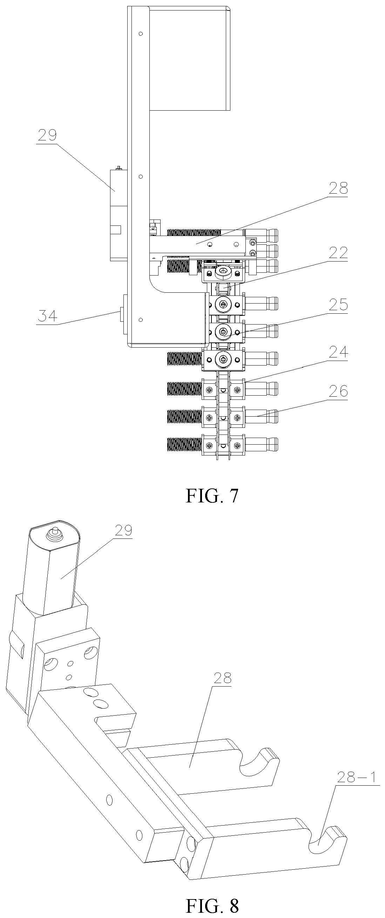

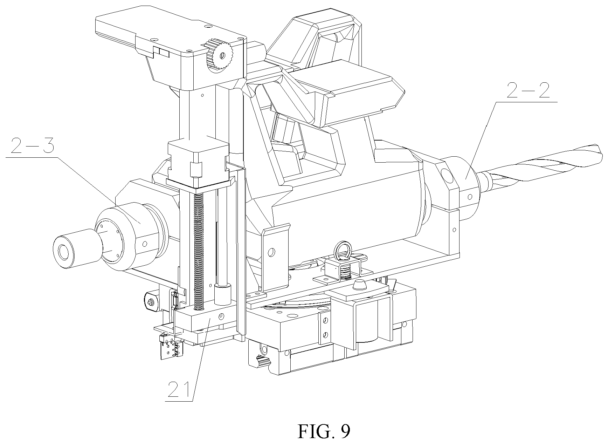

As shown in FIG. 1 to FIG. 9, in the present invention, a suspended drilling and bolt mounting system includes a main frame 1, where a sling 3 used for controlling lifting of the main frame 1 is arranged above the main frame 1, supporting mechanisms are arranged on two sides of the main frame 1 in a length direction, the supporting mechanisms are used for preventing a large shaking amplitude of the main frame 1 in a lifting process, the supporting mechanisms are further used for fixing a position of the main frame 1 during drilling and bolt mounting of the system, a wall supporting mechanism matched with a side wall of a shaft is arranged on a side, close to a to-be-machined surface, of the main frame 1, a drilling and bolt mounting mechanism 2 is arranged below the main frame 1, and a driving mechanism used for driving the drilling and bolt mounting mechanism 2 to move along an X-axis, move along a Y-axis and rotate along a Z-axis is arranged between the main frame 1 and the drilling and bolt mounting mechanism 2.

The supporting mechanism includes an intermediate plate 4 and a floating plate 5, the floating plate 5 is arranged on a side of the intermediate plate 4 away from the main frame 1, a middle position of the floating plate 5 is hinged to the intermediate plate 4 along a vertical direction, a limiting spring 10 used for limiting a swing amplitude of the floating plate 5 is arranged on the intermediate plate 4, the limiting spring 10 is arranged between the floating plate and 5 the intermediate plate 4, supporting claws 6 are arranged at two ends of a side wall of the floating plate 5 away from the intermediate plate 4, a supporting wheel 7 is arranged above or below each supporting claw 6, an elastic component 8 is arranged between the supporting wheel 7 and the floating plate 5, the elastic component 8 is an elastic hinge, under driving of the elastic component 8, a projection of the supporting wheel 7 in a vertical direction is on an outer side of a projection of the supporting claw 6 in a vertical direction, and the main frame 1 is provided with an electric push rod 11 used for reversely pushing the intermediate plates 4 on the two supporting mechanisms towards two sides of the main frame 1.

The intermediate plate 4 and the floating plate 5 are both U-shaped plates, an inner diameter of the floating plate 5 is slightly larger than an outer diameter of the intermediate plate 4, the intermediate plate 4 partially extends into a U-shaped groove of the floating plate 5, a U-shaped connecting frame is arranged on an outer side of the intermediate plate 4, and a link pin 9 matched with the floating plate 5 is vertically arranged in the connecting frame.

The main frame 1 is provided with two sets of sleeve assemblies, which are arranged on two sides of the electric push rod 11 respectively, each sleeve assembly includes a sliding rod 12 and a sliding sleeve 13, an axis of the sliding rod 12 and an axis of the sliding sleeve 13 are parallel to an axis of the electric push rod 11, the sliding rods 12 are slidably connected to two ends of the sliding sleeve 13, and one end of each of the two sliding rods 12 away from the sliding sleeve 13 is fixedly connected to the intermediate plates 4 on the two supporting mechanisms respectively.

The wall supporting mechanism includes two wall supporting wheel assemblies arranged at intervals, each wall supporting wheel assembly includes an L-shaped frame 14 and a wall supporting wheel 15, one end of the L-shaped frame 14 is rotatably connected to the wall supporting wheel 15, the other end of the L-shaped frame is rotatably connected to the main frame 1 along a horizontal direction, and a height of a rotation center of the wall supporting wheel 15 is lower than a height of a rotation center between the L-shaped frame 14 and the main frame 1.

The drilling and bolt mounting mechanism 2 includes a machine frame 2-1 and a drill 2-2 and a knocking hammer 2-3 arranged on the machine frame 2-1, axes of output ends of the drill 2-2 and the knocking hammer 2-3 are parallel, and the drill and the knocking hammer are arranged opposite in direction.

Further, the driving mechanism includes a first sliding rail 16, a second sliding rail 17, and a rotating shaft, the first sliding rail 16 is arranged below the main frame 1 along the X-axis, a first sliding block 18 is slidably connected to the first sliding rail 16, a lead bolt and a first motor are arranged at one side of the first sliding rail 16 for driving the first sliding block 18 to slide back and forth along the X-axis, the second sliding rail 17 is arranged at a lower end of the first sliding block 18 along the Y-axis, a second sliding block 19 is slidably connected to the second sliding rail 17, a lead bolt and a second motor are arranged at one side of the second sliding rail 17 for driving the second sliding block 19 to move back and forth along the Y-axis, the rotating shaft is arranged along the Z-axis, an upper end of the rotating shaft is rotatably connected to the second sliding block 19, a lower end of the rotating shaft is rotatably connected to the machine frame 2-1, and the second sliding block 19 is in transmission connection with a third motor used for controlling the machine frame 2-1 to rotate along the rotating shaft.

A rebar detector 21 is further arranged on the machine frame 2-1, and the rebar detector 21 moves back and forth on the Z-axis driven by a motor lead bolt.

A bolt material supplying assembly is arranged on one side of the second sliding rail 17 away from a to-be-drilled wall, the bolt material supplying assembly includes a chain wheel 22 and a chain 23, the chain wheel 22 is in transmission connection with material supplying motor 34, a rotation center of the chain wheel 22 is arranged along a horizontal direction, the chain 23 is wound on the chain wheel 22, a plurality of material supplying units are arranged on an outer wall surface of the chain 23 at intervals, each material supplying unit includes two bolt clamping plates 24 which are oppositely arranged, a bolt 26 is clamped in the bolt clamping plates 24, and an axis of the bolt is parallel to an axis of the chain wheel 22, a magnet 25 used for attracting the bolt 26 is arranged between the two bolt clamping plates 24 of the material supplying unit, a material supplying in-place switch 27 used for monitoring the bolt 26 is arranged on one side of the highest point of the chain wheel 22, and a material shifting assembly used for shifting the bolt 26 out of the bolt clamping plates 24 so that the knocking hammer 2-3 can grab the bolt 26 conveniently is arranged on one side of the material supplying in-place switch 27.

The material shifting assembly includes a material shifting plate 28 and a material shifting motor 29, an axis of an output end of the material shifting motor 29 is parallel to the axis of the chain wheel 22, two material shifting plates 28 arranged in parallel are arranged at the output end of the material shifting motor 29, the two material shifting plates 28 are arranged at two sides of the chain wheel 22, and each material shifting plate 28 is provided with an arc-shaped groove 28-1 matched with the bolt 26.

One side of the material shifting motor 29 is provided with a material shifting initial position switch 30 and a material shifting in-place switch 31, when the material shifting plate 28 is in contact with the material shifting initial position switch 30, the arc-shaped groove 28-1 is arranged below the material supplying in-place switch 27, and when the material shifting plate 28 is in contact with the material shifting in-place switch 31, the arc-shaped groove 28-1 is arranged above the material supplying in-place switch 27.

Further, the suspended drilling and bolt mounting system further includes a measuring mechanism, where the measuring mechanism includes several distance sensors 32, a controller, and a laser plummet 33 arranged on the main frame 1, and the distance sensors 32, the laser plummet 33, the first motor, the second motor and the third motor are all in circuit connection with the controller.

### Working process:

The system is controlled to enter the shaft by a winch and a sling 3, the two wall supporting wheels 15 on the main frame 1 pressed the to-be-machined wall surface in the shaft, and the electric push rods 11 on the two sides of the main frame 1 extend out, and the two intermediate plates 4 are pushed out towards the two sides, so that the supporting wheel 7 and the supporting claw 6 are driven to get close to the walls on the two sides of the to-be-machined wall surface of the shaft; when the supporting wheel 7 abuts against the side wall of the shaft, and the supporting claw 6 is not in contact with the side wall of the shaft, under the action of a spring hinge, the supporting wheel 7 is elastic in contact with the side wall of the shaft, so that the system moves up and down freely is guaranteed, and meanwhile, the system is prevented from shaking greatly back and forth and left and right in the shaft; and

when the system reaches the drilling position, whether the rebar exists in the to-be-drilled wall or not is detected by the rebar detector 21, and if the rebar exists, the sling 3 and the winch need to adjust the height of the system again. The system is in a plumbing state in the shaft and is always perpendicular to the ground, and in this state, the distance sensor 32 measures the distance between the distance sensor and the wall surface of the shaft for the first time. Then the supporting claw 6 is extended out to be locked with the walls on the two sides, and in this case, the distance sensor 32 measures the distance between the distance sensor and the wall surface of the shaft for the second time. The difference of the values between the second measurement and the first measurement is calculated by the controller, and the difference of the values is used by the drill 2-2. The first motor, the second motor and the third motor on the driving mechanism work with each other to adjust the position of the drill 2-2, so as to ensure that the hole drilled by the drill 2-2 is perpendicular to the ground.

After drilling, the bolt 26 is fed by the chain wheel 22 and the chain 23. When the material supplying in-place switch 27 detects that the bolt 26 is in place, the material supplying motor 34 on the chain wheel 22 stops rotating, the material shifting motor 29 drives the material shifting plate 28 to rotate, and the bolt 26 in the bolt clamping plate 24 is shifted out in the rotating process of the material shifting plate 28; when the material shifting in-place switch 31 senses the material shifting plate 28, the material shifting plate 28 stops rotating, and in this case, the knocking hammer 2-3 approaches and removes the bolt 26 on the material shifting plate 28, and the material shifting motor 29 drives the material shifting plate 28 to rotate reversely; and when the material shifting initial position switch 30 senses the material shifting plate 28, the material shifting plate 28 stops rotating, and waits for the chain wheel 22 to send the next expansion bolt 26 to the material supplying in-place switch 27, and so on, the automatic material supplying of the bolt 26 is completed.

The controller adjusts the position of the knocking hammer 2-3 by working together with the first motor, the second motor and the third motor on the driving. After the bolt 26 is removed by the knocking hammer 2-3, the bolt 26 on the knocking hammer 2-3 is hammered into the hole drilled by the drill 2-2.

Direction and references (e.g., up, down, left, right, etc.) in the present invention may be used only to assist in the description of the features in the accompanying drawings. Therefore, the following specific embodiments are not used in a limiting sense, and the scope of the claimed subject matter is defined only by the appended claims and their equivalents.

The foregoing ideal embodiment according to the present invention is used as an inspiration, and through the above description, those skilled in the art will be able to make various changes and modifications without departing from the scope of the present invention. The technical scope of the present invention is not limited to the content in the description, and the technical scope of the present invention must be determined according to the scope of the claims.

## Claims

1. A suspended drilling and bolt mounting system, comprising a main frame (1), wherein a sling (3) used for controlling lifting of the main frame (1) is arranged above the main frame (1), supporting mechanisms are arranged on two sides of the main frame (1) in a length direction, the supporting mechanisms are used for preventing a large shaking amplitude of the main frame (1) in a lifting process, the supporting mechanisms are further used for fixing a position of the main frame (1) during drilling and bolt mounting of the system, a wall supporting mechanism matched with a side wall of a shaft is arranged on a side, close to a to-be-machined surface, of the main frame (1), a drilling and bolt mounting mechanism (2) is arranged below the main frame (1), and a driving mechanism used for driving the drilling and bolt mounting mechanism (2) to move along an X-axis, move along a Y-axis and rotate along a Z-axis is arranged between the main frame (1) and the drilling and bolt mounting mechanism (2).

2. The suspended drilling and bolt mounting system according to claim 1, wherein the supporting mechanism comprises an intermediate plate (4) and a floating plate (5), the floating plate (5) is arranged on a side of the intermediate plate (4) away from the main frame (1), a middle position of the floating plate (5) is hinged to the intermediate plate (4) along a vertical direction, a limiting spring (10) used for limiting a swing amplitude of the floating plate (5) is arranged on the intermediate plate (4), the limiting spring (10) is arranged between the floating plate and (5) the intermediate plate (4), supporting claws (6) are arranged at two ends of a side wall of the floating plate (5) away from the intermediate plate (4), a supporting wheel (7) is arranged above or below each supporting claw (6), an elastic component (8) is arranged between the supporting wheel (7) and the floating plate (5), under driving of the elastic component (8), a projection of the supporting wheel (7) in a vertical direction is on an outer side of a projection of the supporting claw (6) in a vertical direction, and the main frame (1) is provided with an electric push rod (11) used for reversely pushing the intermediate plates (4) on the two supporting mechanisms towards two sides of the main frame (1).

3. The suspended drilling and bolt mounting system according to claim 2, wherein the intermediate plate (4) and the floating plate (5) are both U-shaped plates, an inner diameter of the floating plate (5) is slightly larger than an outer diameter of the intermediate plate (4), the intermediate plate (4) partially extends into a U-shaped groove of the floating plate (5), a U-shaped connecting frame is arranged on an outer side of the intermediate plate (4), and a link pin (9) matched with the floating plate (5) is vertically arranged in the connecting frame.

4. The suspended drilling and bolt mounting system according to claim 2, wherein at least one set of sleeve assembly is arranged on the main frame (1), the sleeve assembly comprises a sliding rod (12) and a sliding sleeve (13), an axis of the sliding rod (12) and an axis of the sliding sleeve (13) are parallel to an axis of the electric push rod (11), the sliding rods (12) are slidably connected to two ends of the sliding sleeve (13), and one end of each of the two sliding rods (12) away from the sliding sleeve (13) is fixedly connected to the intermediate plates (4) on the two supporting mechanisms respectively.

5. The suspended drilling and bolt mounting system according to claim 1, wherein the wall supporting mechanism comprises two wall supporting wheel assemblies arranged at intervals, each wall supporting wheel assembly comprises an L-shaped frame (14) and a wall supporting wheel (15), one end of the L-shaped frame (14) is rotatably connected to the wall supporting wheel (15), the other end of the L-shaped frame is rotatably connected to the main frame (1) along a horizontal direction, and a height of a rotation center of the wall supporting wheel (15) is lower than a height of a rotation center between the L-shaped frame (14) and the main frame (1).

6. The suspended drilling and bolt mounting system according to claim 1, wherein the drilling and bolt mounting mechanism (2) comprises a machine frame (2-1) and a drill (2-2) and a knocking hammer (2-3) arranged on the machine frame (2-1), axes of output ends of the drill (2-2) and the knocking hammer (2-3) are parallel, and the drill and the knocking hammer are arranged opposite in direction.

7. The suspended drilling and bolt mounting system according to claim 6, wherein the driving mechanism comprises a first sliding rail (16), a second sliding rail (17), and a rotating shaft, the first sliding rail (16) is arranged below the main frame (1) along the X-axis, a first sliding block (18) is slidably connected to the first sliding rail (16), a lead bolt and a first motor are arranged at one side of the first sliding rail (16) for driving the first sliding block (18) to slide back and forth along the X-axis, the second sliding rail (17) is arranged at a lower end of the first sliding block (18) along the Y-axis, a second sliding block (19) is slidably connected to the second sliding rail (17), a lead bolt and a second motor are arranged at one side of the second sliding rail (17) for driving the second sliding block (19) to move back and forth along the Y-axis, the rotating shaft is arranged along the Z-axis, an upper end of the rotating shaft is rotatably connected to the second sliding block (19), a lower end of the rotating shaft is rotatably connected to the machine frame (2-1), and the second sliding block (19) is in transmission connection with a third motor used for controlling the machine frame (2-1) to rotate along the rotating shaft.

8. The suspended drilling and bolt mounting system according to claim 7, wherein a rebar detector (21) is further arranged on the machine frame (2-1), and the rebar detector (21) is provided with a motor lead bolt used for controlling the rebar detector (21) to move back and forth on the Z-axis.

9. The suspended drilling and bolt mounting system according to claim 6, wherein a bolt material supplying assembly is arranged on one side of the second sliding rail (17) away from a to-be-drilled wall, the bolt material supplying assembly comprises a chain wheel (22) and a chain (23), a rotation center of the chain wheel (22) is arranged along a horizontal direction, the chain (23) is wound on the chain wheel (22), a plurality of material supplying units are arranged on an outer wall surface of the chain (23) at intervals, each material supplying unit comprises two bolt clamping plates (24) which are oppositely arranged, a bolt (26) is clamped in the bolt clamping plates (24), and an axis of the bolt is parallel to an axis of the chain wheel (22), a magnet (25) used for attracting the bolt (26) is arranged between the two bolt clamping plates (24) of the material supplying unit, a material supplying in-place switch (27) used for monitoring the bolt (26) is arranged on one side of the highest point of the chain wheel (22), and a material shifting assembly used for shifting the bolt (26) out of the bolt clamping plates (24) so that the knocking hammer (2-3) can grab the bolt (26) conveniently is arranged on one side of the material supplying in-place switch (27).

10. The suspended drilling and bolt mounting system according to claim 9, wherein the material shifting assembly comprises a material shifting plate (28) and a material shifting motor (29), an axis of an output end of the material shifting motor (29) is parallel to the axis of the chain wheel (22), two material shifting plates (28) arranged in parallel are arranged at the output end of the material shifting motor (29), the two material shifting plates (28) are arranged at two sides of the chain wheel (22), and each material shifting plate (28) is provided with an arc-shaped groove (28-1) matched with the bolt (26).

11. The suspended drilling and bolt mounting system according to claim 10, wherein one side of the material shifting motor (29) is provided with a material shifting initial position switch (30) and a material shifting in-place switch (31), when the material shifting plate (28) is in contact with the material shifting initial position switch (30), the arc-shaped groove (28-1) is arranged below the material supplying in-place switch (27), and when the material shifting plate (28) is in contact with the material shifting in-place switch (31), the arc-shaped groove (28-1) is arranged above the material supplying in-place switch (27).

12. The suspended drilling and bolt mounting system according to claim 7 or 8, further comprising a measuring mechanism, wherein the measuring mechanism comprises several distance sensors (32) a controller, and a laser plummet (33) arranged on the main frame (1), and the distance sensors (32), the laser plummet (33), the first motor, the second motor and the third motor are all in circuit connection with the controller.
